(19) Europäisches Patentamt
European Patent Office
Office européen des brevets

(11) **EP 3 825 913 A1**

(12) **EUROPEAN PATENT APPLICATION**

(43) Date of publication:
**26.05.2021 Bulletin 2021/21**

(51) Int Cl.:
***G06K 9/62*** *(2006.01)*          ***B25J 9/16*** *(2006.01)*
***G06K 9/00*** *(2006.01)*

(21) Application number: **19383018.9**

(22) Date of filing: **19.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Khegal Aeronautica, SL**
**20100 Guipúzcoa (ES)**

(72) Inventors:
- **Juanikotena Urruzola, Juan Miguel**
  **20100 Guipúzcoa (ES)**
- **Jauregui Llanillo, Oscar**
  **20100 Guipúzcoa (ES)**
- **López Saralegui, Carlos Fidel**
  **20280 Guipúzcoa (ES)**

(74) Representative: **Balder IP Law, S.L.**
**Paseo de la Castellana 93**
**5ª planta**
**28046 Madrid (ES)**

(54) **METHOD AND SYSTEM FOR AIDING IN LOADING PARTS IN MANUFACTURING OPERATIONS**

(57)    A computer-implemented method for aiding in loading work parts in a machine tool, comprising: with at least one image capture device (5), capturing (42) at least one image of a work part (6) to be loaded in a machine tool; digitally extracting (43) at least one image feature of said at least one captured image, wherein the said at least one image feature is selected from the following group: RGB, grey scale, black & white, IR and depth; digitally preprocessing (44) the at least one extracted image feature; from the at least one preprocessed image feature, comparing (46) the work part (6) with a reference model thereof; from the result of said comparison, establishing (47, 48) whether the work part is the correct one or not. A system for aiding in loading work part in a machine tool.

**FIG. 1**

Printed by Jouve, 75001 PARIS (FR)

**Description**

**TECHNICAL FIELD**

The present invention relates to the field of manufacturing and finishing work parts using robotised cells. In particular, it relates to methods and systems for verifying that a selected work part to be treated by an industrial machine is the right one or it is correctly positioned or oriented.

**STATE OF THE ART**

In part manufacturing and/or finishing processes, it is common to use a manipulator, such as a robot, to perform tasks for which it has been programmed. These tasks may be wide-ranging, depending on the type and application of the work part. Examples of such tasks include machining, smoothing and deburring, among others. In order to facilitate the treatment of a work part using a manipulator, the part is sometimes mounted on a table and the manipulator is programmed to pick up the part from the table and take it to the corresponding machine. Alternatively, the parts are sometimes stored in a rack, storage area or magazine, from which they are picked up by the manipulator in order to take them to the final destination, for example a machine for machining the part.

Depending on the type of work parts to be operated and on the amount of identical parts to be operated, storage areas and/or mounting tables may include proof-error mechanisms, such as positioners, in order to prevent the manipulator to collect a wrong part, for example due to a human error when the parts are loaded. Due to their elevated cost, proof-error mechanisms are usually employed in very repetitive processes, in which hundreds or thousands of identical parts are to be operated.

However, for very short series of parts, that only involve for example a few identical parts per year, which additionally sometimes involve very short operation time, it is not worth investing in proof-error systems.

There is therefore a need to develop a new method for preventing errors in selection or orientation of work parts in robotized manufacturing and finishing processes, which is efficient even for short series of work parts.

**DESCRIPTION OF THE INVENTION**

The computer-implemented method for aiding in loading work parts in manufacturing operations described in the present disclosure intends to solve the shortcomings of prior-art methods. The method of the present disclosure permits very quick configuration and it is therefore efficient even for the loading of very short series of work parts.

The method for aiding in loading work parts involves data capture, data preprocessing and processing and validation of the work part. The method of work part validation employs artificial vision techniques for comparing a work part with a part reference model. Besides, the first time a new part is loaded (picked up) for example by a manipulator, a model for the new part is created, in order to later perform the validation stage by comparing the captured data of a work part with data of the part model.

A first aspect of the invention relates to a computer-implemented method for aiding in loading work parts in a machine tool, comprising: with at least one image capture device, capturing at least one image of a work part to be loaded in a machine tool; digitally extracting at least one image feature of said at least one image, wherein the at least one image feature is selected from the following group: RGB, grey scale, black & white (B&W), IR (such as NIR or FIR) and depth; digitally preprocessing the at least one extracted image feature; from said at least one preprocessed image feature, digitally comparing the work part with a reference model thereof; from the result of said comparison, establishing whether the work part to be loaded is the correct one or not or correctly positioned or oriented or not.

In embodiments of the invention, prior to digitally comparing the work part with a reference model thereof, digitally obtaining at least one image attribute from the preprocessed extracted image features.

In embodiments of the invention, the method comprises, prior to capturing the image for comparison, digitally creating a reference model. The reference model may be created as follows: with the at least one image capture device, capturing an image of a first work part of a certain model; digitally extracting at least one image feature of the captured image, wherein the at least one image feature is selected from the following group: RGB, grey scale, B&W, IR and depth.

In embodiments of the invention, the area in the picture/image occupied by the work part used for creating the reference model, is modelled from border lines and/or corners of the work part digitally obtained from the RGB data, grey scale data, B&W data, IR data and/or depth data.

The creation of the reference model may comprise segmenting the captured image into a plurality of regions of interest having a configurable number of pixels n x m.

The creation of the reference model may further comprise at least one of: obtaining the outer surface of the volume defined by the part used for creating the reference model; obtaining the color or colors of the part used for creating the reference model; obtaining masks or blind points of the part used for creating the reference model; obtaining measuring points, such as corners, of the part used for creating the reference model.

In embodiments of the invention, the stage of digitally obtaining at least one image attribute further comprises at least one of: obtaining the outer surface of the volume defined by the part; obtaining the color or colors of the part; obtaining masks or blind points of the part; obtaining measuring points, such as corners, of the part.

In embodiments of the invention, the stage of digitally preprocessing the at least one extracted image feature further comprises segmenting the captured image into at least one region of interest having a configurable number of pixels n x m.

In embodiments of the invention, the stage of digitally comparing the work part with a reference model thereof, further comprises, for each region of interest into which the image has been divided: establishing a confidence index representing an estimation of how close to its corresponding region of interest in the piece model the current region of interest is; selecting the minimum confidence index of all regions of interest, said minimum confidence index being the confidence index for said image.

In embodiments of the invention, in which image features of a plurality of image features are extracted, the method further comprises: at the stage of digitally comparing the work part with a reference model thereof, establishing a confidence index for each image feature, said confidence index representing an estimation of how close to its model the work part is; calculating a total confidence by weighting the percentage of certainty of each image feature according to a weight assigned to each image stream.

In embodiments of the invention, the surface of the volume defined by the work part is modelled from border lines and/or corners of the work part digitally obtained from the RGB data, grey scale data, black & white data, IR data and/or depth data.

A second aspect of the invention relates to a system for aiding in loading work parts in a machine tool, comprising: at least one image capture device for capturing at least one image of a work part; processing means configured for performing the method previously disclosed.

A third aspect of the invention relates to a computer program product comprising computer program instructions/code for performing the method previously disclosed.

A fourth aspect of the invention relates to a computer-readable memory/medium that stores program instructions/code for performing the method previously disclosed.

Additional advantages and features of the invention will become apparent from the detail description that follows and will be particularly pointed out in the appended claims.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a cross section of a piece magazine from which pieces to be operated (manufactured, machined, finished, etc.) may be picked by a manipulator, according to embodiments of the invention.

Figure 2 shows in schematic form a machine for operating work pieces (left) and a manipulator (right) for picking up a piece from a piece magazine or from a table and taking it to the machine.

Figures 3A and 3B show respective flow charts of the stage of piece definition according to embodiments of the invention.

Figure 4 shows a flow chart of the method for aiding in loading work pieces according to embodiments of the invention.

Figure 5 shows a grid of small images obtained in the preprocessing stage of figure 4.

Figure 6 shows a flow chart of the comparison stage of the flow chart of figure 4.

## DESCRIPTION OF A WAY OF CARRYING OUT THE INVENTION

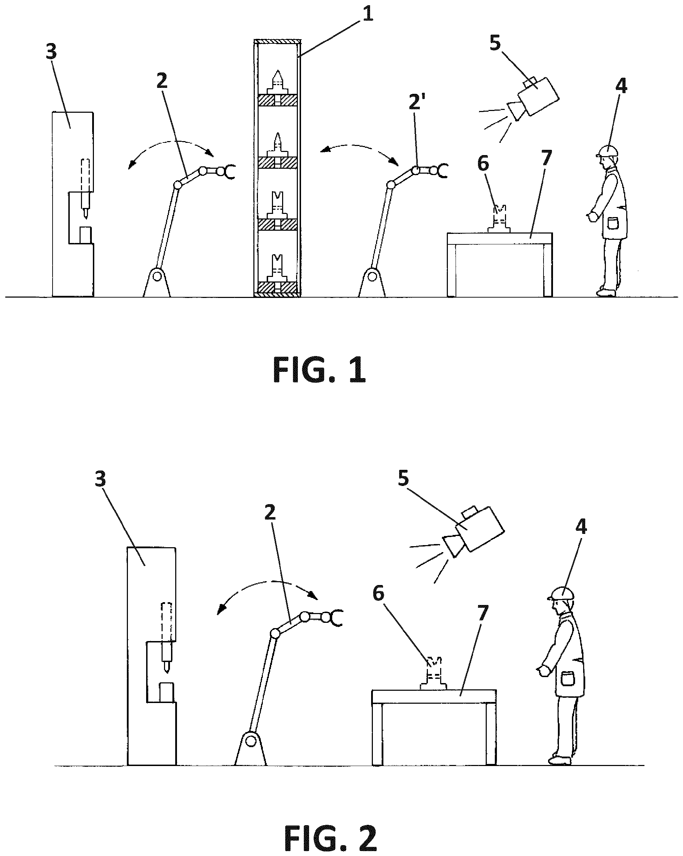

Figure 1 shows a cross section of a piece magazine 1 that may be used in a process for manufacturing or finishing work parts, preferably a process in which a machine tool is used for machining work parts. The illustrated part magazine 1 is arranged vertically, that is to say, it has different rows defining vertical positions in which parts are stored. Alternatively, the part magazine may be arranged horizontally, that is to say, it may have a single row with different horizontal positions in which pieces may be stored. The part magazine may also present a combined arrangement of rows and columns defining positions for storing work parts. In any case, the parts are provided for the access of a manipulator 2, which takes the work parts to an industrial machine or production machine, such as a machine tool for machining the work parts. The manipulator 2 can remove a work part from the magazine 1 and supply it to the production machine 3. Non-limiting examples of the manipulator 2 are an industrial robot or an articulated robot arm. So, the manipulator 2 collects the work part located in a certain position of the magazine 1 and takes it to the machine 3 for its processing. The manipulator 2 is programmed for picking up the work part stored in a specific position of the magazine. The specific position in the magazine is defined by certain coordinates, towards which the manipulator 2 moves. The magazine 1 is usually fitted (with work parts to later be loaded into the industrial machine) by a manipulator 2', such as a robot. The manipulator 2' that fits work parts in the magazine 1 may be the same manipulator 2 that picks up parts from the magazine 1 and takes them to the industrial machine 3, such as machine tool, or a different one. The loading of work parts into the magazine 1 may be as follows: an operator 4, who may be assisted by a computer, places work parts 6 on a loading stand or loading table 7. Then, the manipulator 2' collects the work part 6 from the loading table 7 and takes it to its specific location in the magazine 1, for which it has been programmed. The operator 4 must place on the loading table 7 the correct work part 6, in the correct position and orientation. Otherwise, the manipulator 2' will place in the magazine 1 a wrong part, or a part incorrectly oriented or positioned.

In order to prevent errors, such as human errors, for example by placing on the loading table 7 an incorrect part, or the correct part but in a wrong position or orientation, an imaging device or image capture device 5 is disposed in the vicinity of the loading table 7 on which work piece 6 to be loaded is disposed.

The image capture device 5 must be placed in a position that allows the capture of data of the work part 6 to be loaded on the loading table 7. Therefore, the image capture device 5 must have a clear view -line of sight- of the loading area. That is to say, the position and orientation of the image capture device 5 must enable to visually distinguish a bad work part from a good work part. For example, a bad work part may be a wrong part or a part incorrectly positioned or oriented. A good work part may be a correct part and additionally correctly positioned and oriented. Depending on the circumstances, one or more image capture devices 5 may be required.

An image capture device may have one or more video channels (also referred to as video streams). Video streams refer to the type of information collected by the image capture device. Different video streams provide different information about the captured image, such as, but not limiting, color image (RGB), greyscale image, black and white (B&W) image, infrared image (IR), such as near infrared (NIR) or far infrared (FIR) and depth information (depth). With such an image capturing device, apart from basic information such as RGB or greyscale values and resolution, additional information, such as 3D information (depth) may be obtained. For example, a binocular camera may simultaneously capture RGB and NIR information, obtaining depth information from certain processing applied to the NIR information, for example by applying structured light or TOF (Time-Of-Flight).

Depending on the application and its requirements, one or more image capture devices may be used, including stereo or non-stereo ones. When more than one views are required, a stereo image capture device (stereo camera) may be used instead of several independent image capture devices providing a single video stream. When stereo image capture devices are used, one, several or all the available video streams may be used. In embodiments of the invention, only one image capture device is required.

In embodiments of the invention, more than one image capture devices may be used in order to take different pictures of a same work part and therefore to improve the quality of the captured data. Examples of situations where several image capture devices are required are an application that requires extra precision or an application that requires control of several viewpoints of a work part - the front and back of the part at the same time, for example-. In this case, each picture is analysed independently from the other picture(s), thus performing independent validation of front and back of the part, for example.

In embodiments of the invention, the image capture device may be a multispectral image capture device. Examples of such devices available in the market are the Parrot Sequoia camera or the Micasense RedEdge camera.

In embodiments of the invention, the image capture device may be a device for capturing a cloud of laser points. In other embodiments, it may be an image capture device working in the far infrared (FIR).

The image capture device 5 shown in figures 1 and 2 is a camera, although any other suitable image capture device may be used instead. The camera may be a CMOS camera, that is to say, a camera having a CMOS sensor, or the camera may be a charge-coupled device camera (CCD camera), or a camera based on a different sensing technology. The camera 5 is out of the scope of the present disclosure.

Figure 2 schematically shows an alternative configuration, in which there is no part magazine. In this case, a manipulator 2 picks up a work part 6 from the loading table 7 on which the operator 4 has placed the part to be loaded into the industrial machine or production machine 3, such as machine tool, and takes the collected part directly to the production machine 3 for processing the work part. Like in the previous case, the operator 4 must place on the loading table 7 the correct work part 6, in the correct position and orientation. In order to prevent errors, such as human errors, for example by placing on the loading table an incorrect part, or the correct part but in a wrong position or orientation, an imaging device or image capture device 5 is disposed in the vicinity of the loading table 7 on which the work part 6 to be loaded is disposed.

In embodiments of the invention, either the work part 6 to be analyzed or the image capture device 5 may be movable, in order to improve the quality of the captured data. For example, the work part 6 may be disposed on a turnplate (not shown).

In an alternative configuration (not shown), the operator 4 loads directly the work part into the industrial machine 3. In other words, there is no manipulator picking up the work part from a loading table or loading the work part into the industrial machine. In this case, the at least one image capture device 5 is placed at or in the vicinity of the industrial machine 3, in order to allow the capture of data of the work part being loaded.

The method of the present invention estimates whether the work part 6 to be picked up/loaded is the correct one or not, and/or whether it is correctly oriented or not, from at least one image of the work part 6 taken by the camera 5 (in general, image capture device).

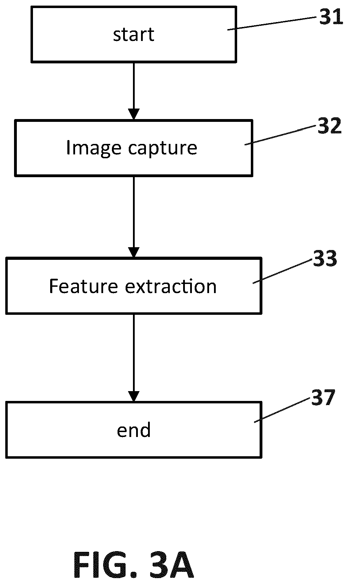

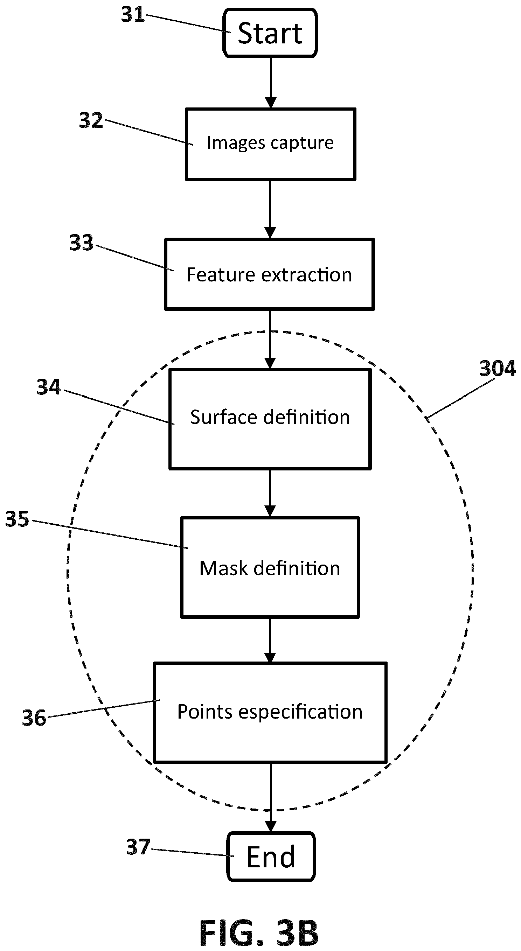

The method for aiding in loading work parts into a production machine 3 by a manipulator 2, 2' involves image capturing, preprocessing and processing, and validation of the work part corresponding to the captured image. The processing stage may comprise analysis, comparison and calculation sub-stages. The method requires at least one video channel or video stream, providing a corresponding picture. The at least one video channel provides a RGB picture, or a black-and-white picture, or a grey scale picture, or an IR picture (such as NIR or FIR), or a picture based on a different characteristic. Prior to the execution of the method, the first time a new work part is loaded (picked up) for example by the manipulator 2, 2', a model for the new part needs to be created. This is explained next with reference to figures 3A and 3B, which shows a flow chart of the work part definition according to embodiments of the invention. This stage is performed only once, when a new work part is to be processed. There is no need to repeat this stage for the whole series of part of the same type or model.

As shown in figure 3A, when a new type of work part needs to be processed, the stage for creating the work part model is started 31. The purpose of this stage is to create a data base with data of the different types of work parts to be processed, for their later validation. This is performed in processing means, such as a general-purpose processor of a work station, personal computer (PC), laptop or any other electronic device comprising processing means. The processing means performs the method of the present invention by executing corresponding software instructions. The processing means may be located either locally, for example in the vicinity of the loading table 7, or remotely, for example in the cloud or in any other environment providing enough computation capacity. The software code for performing the method of the invention and the pictures and auxiliary information related to the work parts, may be stored in memory means associated to the processing means, such as in a hard disk (HD) of the computer device to which the processing means belongs, or in memory means remotely located, such as in a server, or in any other suitable data storage means. The data of the different types of work parts to be processed corresponds to the physical characteristics of the part to be loaded and processed. At least one image of the work part 6 is captured 32 by camera 5. The computing means or processing means in which the method is executed must have a minimum processing capacity, such as at least 1 Gflop/s (Gigaflops per second = $10^9$ flops per second). The images may be stored in any graphics file format. The images are preferably stored in a graphics file format supporting lossless data compression. Non-limiting examples of formats in which the images may be stored are Graphics Interchange Format (GIF) and Portable Network Graphics (PNG). Most preferably, the images are stored in PNG format.

From the at least one captured image, image features are extracted 33. Depending on the type of captured image or images, the extracted image features may be, for example, RGB, greyscale, B&W, IR (such as NIR or FIR) and/or depth features. The work part model is thus ended 37.

Figure 3B illustrates the creation of a model for a new part according to an alternative embodiment. In this embodiment, the stages of image capture 32 and feature extraction 33 are the same as those of the general process of model creation of figure 3A. From the extracted features 33, a set of image attributes may be identified 34, 35, 36 (block 304 in figure 3B). The set of image attributes 304 may comprise the shape and/or dimensions of the work part 34, in other words, the outer surface of volume defined by the work part within the area of the whole image or a restricted area within the image. This surface may be obtained by defining points in the image that are joined together to form a closed trajectory. The objective of this stage 34 is to identify the perimeter of the area to be analyzed in order to separate it from the background image. This may be done either manually or automatically. It is preferably done manually, meaning that a user may extract the image attributes of his/her interest. For example, it may be done by drawing with the mouse around the area to be analyzed, adding points that construct a polyline of its perimeter. Or it may be done automatically, by comparing part versus background. Or it may be done by combining manual and automatic techniques.

Also optionally, the set of image attributes 304 may also include other attributes, such as color of the work part (not shown in figure 3B), masks or blind points 35, specific measuring points 36, such as corners, and/or regions of special interest ROI (not shown in figure 3B), among others. Regarding the mask or blind points definition 35, this stage focuses on identifying areas of an image that should be bypassed during validation, similar to what is done with a mask in image editing programs. It is useful, for example, in cases of parts with non-relevant and moving areas, which could unnecessarily distort the comparison. Perimeter delimitation may be done manually or combining manual and automatic techniques, for example by means of the drawing of a polyline to generate its perimeter, or automatically, for example by using circles, ellipses, rectangles, etc.

Regarding specific measuring points (points specification), this stage 36 enables to add measuring points to the part information. Measuring points are pairs of points that generate a measurement that needs to be expressly checked, such as any of the dimensions of a part (height, width, depth, diagonal, etc.). They are generated by pointing out the two points consecutively, for example, vertices.

The stage for creating the work part model ends 37 and the image attributes 304 are stored as a model for the work part, to be used in the later stages which are part of the method for aiding in loading work part of the same type/model as the modelled one.

The stage of part model creation represented in figures 3A-3B is done only once, typically the first time a new work part is loaded. Next, every time a new work part of the same type/model as the one previously characterized or modelled has to be loaded for example by the manipulator 2, 2' into a production machine 3, the method for aiding in loading work parts is executed, as explained next.

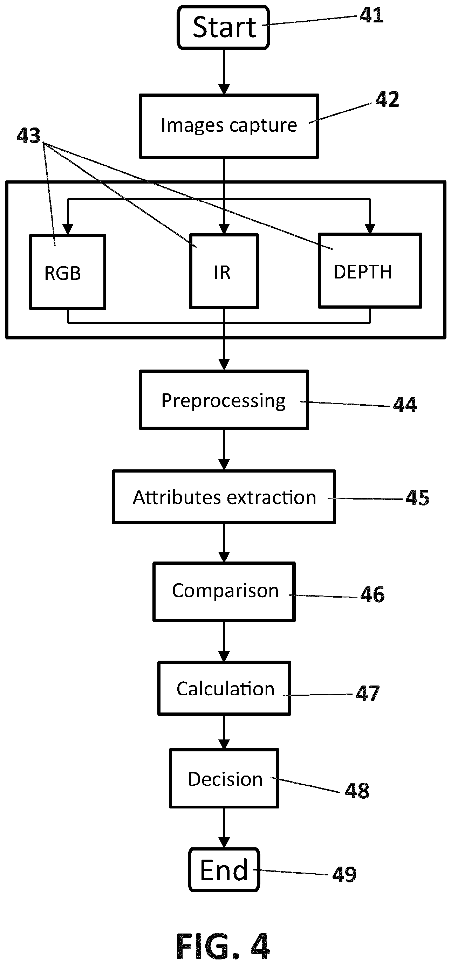

Figure 4 shows a flow chart of the method for aiding in loading work parts according to a possible implementation of the invention. The method is performed during the loading of the work part 6 in the production machine 3. The method involves image capturing, preprocessing and processing. Once the method has started 41, at least one image of the work part for example disposed or to be disposed by an operator 4 on a loading table 7 or directly on the production machine is captured 42. The at least one image may in fact be a video sequence, that is to say, a plurality of images. In this context, the terms "image" and "frame" may be used interchangeably. The at least one image is captured 42 by camera 5. The camera 5 is used for obtaining appearance characteristics of the work part 6 to be loaded. Like in the stage for creating a part model referred to in figures 3A-3B, the at least one image is stored in memory means, such as in a remote server, or in a local hard disk, or in any other suitable data storage means. From the at least one captured image, image features are extracted 43 in a similar way as the features 33 extracted from the at least one image used for the creation of the part model of figures 3A-3B. While during the creation of a part model attributes are preferably defined manually by the user, at this stage 45 it is done automatically, following the already defined part model. For each image channel or image stream, such as RGB, greyscale, B&W, IR (such as NIR or FIR), depth, etc., available at the one or more cameras 5, independent feature extraction is performed 43. The extracted features for each one of the at least one image stream will be treated independently from the extracted features for the other image streams, as will be explained later. In embodiments of the invention, at least one of RGB features, B&W features, greyscale features, IR features and depth features is extracted. The type of extracted features depends, among other things, on the sensing means of the one or more cameras, which in turn may be selected depending on the requirements demanded by a specific application to which the method is applied.

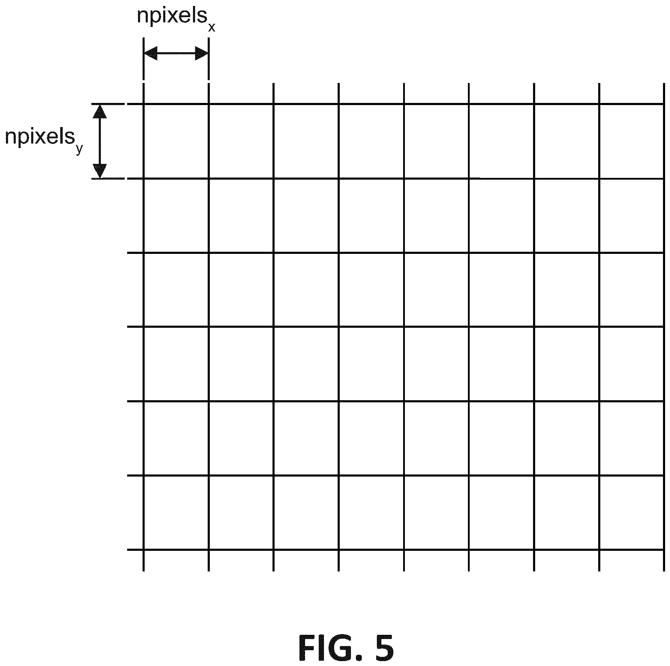

The extracted image features are first preprocessed 44. The pre-processing stage 44 is responsible for minimizing the impact of distortions in comparison processes based on artificial vision, which may include one or more modification steps (morphological or not) to compensate for these distortions so that they do not affect the comparison with the model (distortion may be caused by lighting changes, modifications to non-relevant parts, such as the surface textures in an aluminum block, etc.). The preprocessing stage 44 may involve filtering and segmenting the image. In the preprocessing stage 44, a grid of small images, also referred to as regions of interest (ROI), having a configurable number of pixels n x m, may be created, as shown in figure 5. In other words, the image is segmented in smaller portions (regions of interest), wherein the regions of interest overlap with adjacent ones, in such a way that defects localized in the image, such as the presence of a loose nut, for example, can be identified. In sum, each image may be segmented into a set of regions of interest (ROI) of n x m pixels, overlapped with adjacent ROIs, that enable a localized comparison of each work part area with a corresponding area in the part model. Later, the validation of each region of interest will result in the validation of the complete image. Later, when comparing the different segments (regions of interest) that are generated, the part perimeter information and a blind zone information may be incorporated partially or fully into the segments, depending on whether the segment is fully included in a mask or outside the perimeter (in which case the segment is discarded in the validation process and does not intervene). In cases where a segment is partially affected by a blind zone or by the perimeter of the part, the zones to be "not compared" are taken into account in the validation process and are ignored, thus not affecting the result. In other words, segments marked as non-relevant may be ignored in later stages. For example, a segment that belongs entirely to a mask area may be disregarded in this stage.

Once preprocessed 44, the image must be analysed, that is to say, compared with a corresponding part model (stage 46). In a possible embodiment, referring to a simple situation, the image is compared with its model without defining perimeters, masks or blind zones or measuring points. In this case, the image may be compared 46 with is model pixel by pixel. Optionally, prior to performing the comparison, one or more image attributes may be extracted from the preprocessed image (stage 45). In this case, from the preprocessed extracted features 44, in an attributes extraction 45 a set of image attributes is obtained. The image may have any format or any type of information, such as RGB, B&W, greyscale, IR, depth, etc. In embodiments of the invention, the set of image attributes extracted 45 from the preprocessed extracted features 44 comprises at least the shape and dimensions of the work part (the outer surface of volume defined by the work piece). Like in the stage for creating a piece model, the set of image attributes 45 may also include other attributes, such as color of the work piece, masks or blind points, specific measuring points and/or regions of special interest ROI, among others. In other words, block 45 in figure 4 may comprise one, some or all the stages of surface definition 34, mask definition 35 and points specification 36, among others, explained with reference to figure 3B regarding the creation of a part model.

Thus, at stage 45, the attribute extraction may include a search for vertexes (corners). Corner search is performed to check measuring points. In other words, if there are no measuring points, corner search may not be necessary. As measuring points are points that require a physical reality -for example, the center of an empty circle cannot currently be used-, the system looks for recognizable corners in the vicinity of where they are supposed to be, according to the measurement points indicated in the model part. For this analysis, the Harris algorithm may for example be used. The Harris algorithm is a well-known corner detection operator that is used in computer vision algorithms to extract corners and infer features of an image. Corners are searched for in areas in the vicinity of measuring points defined by the Harris algorithm.

These parameters or attributes, such as corners, are translated at least into graphic information of the work part in manipulable format that enable to perform any necessary validations, such as location of points of the work part in a three-dimensional space (either in Cartesian coordinates, point cloud, polar coordinates, projection of the image capture, etc.) or color validation.

Next, a comparison stage 46 is performed. The method used to compare an image with its model may be based on comparing the same image at different levels, using the so-called pyramid representation conventionally used in computer vision. In embodiments of the invention, regarding a captured image, in a first stage the whole image is compared with its model, in order to quickly disregard very different images. In other words, if after a comparison of the complete image with its model, clear differences are appreciated between the work part and its model, the work part is directly considered invalid. A detailed comparison, for example based on the comparison of the different regions of interest into which the complete image has been segmented, with corresponding regions of interest in the part model, and eventually at pixel level if required, is done when the result of the former comparison has not determined that the work part is not valid.

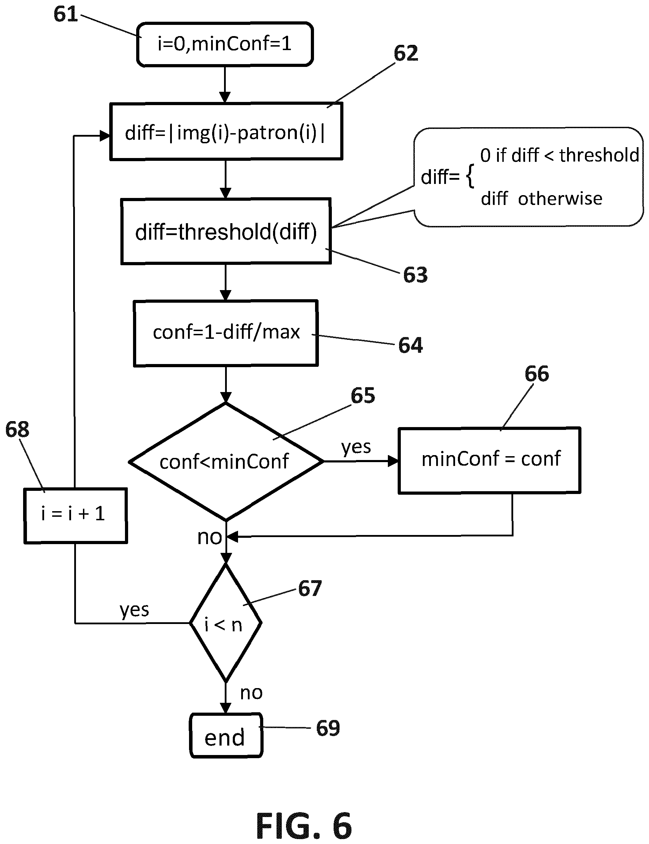

The comparison stage 46 is performed executing the algorithm of figure 6, in which data obtained in the preprocessing stage 44 and optionally in stage 45 of figure 4 is compared with data of the part model (figures 3A-3B). The comparison performed in the comparison stage 46 is based on image comparison, either comparing complete images or comparing image segments. In embodiments of the invention, at this stage 46, the image portion (region of interest, ROI) that most differs from the corresponding portion in the part model obtained in the algorithm of figure 3, is searched for.

The process at stage 46 works as follows: For each image source (for example, but not limiting, RGB, B&W, greyscale, IR and/or depth), for each segment into which the image has been divided, a certain confidence index is established, such as a confidence index for the RGB channel, a confidence index for the IR channel and a confidence index of the depth channel. This confidence index represents an estimation of how close to its model a work part is. In other words, it represents a percentage of match/mismatch between the work part and its model (or between a segment of the work part and a corresponding segment of its model, when the comparison is performed segment by segment). The workflow of figure 6 represents the process performed for a segment. The same is done recursively for all segments. When an image is not segmented, the workflow of figure 6 is applicable to a complete image, in which case there is no need to repeat the process recursively.

First (stage 61), the values of confidence index used for a previous segment are reset (when i=0, the confidence index has its maximum value 100% and is represented as minConf=1).

Next (stage 62), a difference diff between the segment of the current work part and its corresponding model part is calculated numerically. If instead of a segment, the whole image is being analyzed, this stage is performed in a similar way (the process is the same, whether it is done with a full image or a segment). The difference diff may be obtained by calculating a distance (also referred to as discrepancy or error) between corresponding segments or images.

A minimum threshold is established (block 63) in order to disregard minimum discrepancies.

This minimum threshold, which can be configured according to preferences that may depend on the application, permits to disregard small discrepancies that, depending on the application, should not cause a work part to be invalidated. If the minimum threshold is not reached, the difference diff calculated at stage 62 is fixed to 0. Otherwise, the calculated difference diff is maintained (stage 63).

Next (stage 64), the confidence index conf is computed as 1 minus the current difference diff with respect to the maximum mathematically possible difference max, resulting in a numerical percentage % of confidence index. For example, the maximum difference for a totally black image is set by comparing it with a totally white image, resulting in a max error of 100 (e.g., max is a value that is precalculated for each segment of the part model). In other words, once the maximum mathematically possible error is known, the confidence index calculates the result of dividing the segment error diff by the maximum error max (resulting in the percentage of detected error with respect to the maximum possible error) from which the confidence index is deduced as 1 minus that estimated percentage error (1 - diff/max).

In embodiments of the invention, once the confidence index conf of the current segment is obtained, the minimum confidence value minConf shared by all segments of a part is updated (this is based on the fact that the confidence index given to a particular part may be determined by the weakest link, that is to say, the segment with the least confidence index, which determines the confidence of the part as a whole). At this point, if the confidence index conf of a given segment is lower than the lowest confidence index minConf detected so far (block 65), the current segment marks or defines the new minimum confidence level, minConf before moving to the next segment (block 66).

Finally, it is checked (block 67) whether there are still segments to be analyzed. If there are, the process starts again with the next segment (block 68). If there are not, the analysis of the current work part is finished (block 69).

The comparison that has been disclosed with reference to figure 6 applies to any one of the available image types (RGB, B&W, greyscale, IR (NIR or FIR for example), depth, etc.). If the image device(s) provide(s) more than one image types, the analysis is performed in the same way for each image type, ultimately resulting in as many passes as streams (channels) are being used.

In the event that the work part has attributes, such as measuring points, an additional comparison is performed, in which the attributes (for example measuring points) of the work part are compared with the corresponding attributes of the part model, in order to compute their distance, thus computing the percentage of error or the percentage of match. If the percentage of error is higher than a certain error established as acceptable (for example, by establishing a maximum dimensional error of 2%), the work part may be considered not valid due to a dimensional failure.

By applying the method of the present disclosure, it is determined whether the work part 6 to be loaded corresponds with the work part that must be loaded in the production machine 3 (for example for machining the work part) or not. For such determination, a percentage of confidence is calculated. The percentage of confidence may later be used in the final decision.

Turning back to figure 4, after the comparison stage 46 is performed (as shown for example in figure 6), once the image portion (segment) of the current work part that most differs from a corresponding image portion of the part model, has been identified, a confidence calculation is performed 47. The calculation of the total confidence (% Total confidence) is made by weighting the percentage of certainty of each one of the image sources (for example, % RGB, %NIR, %Depth) according to configurable weights $K_1$, $K_2$, $K_3$, as follows:

$$\text{Total confidence (\%)} = 1/(\%RGB * K_1 + \%NIR * K_2 + \%Depth * K_3)$$

wherein the sum of $K_1 + K_2 + K_3 = 1$. It is remarked that $K_1$, $K_2$, $K_3$ represent a particular embodiment in which there are three image streams (RGB, NIR and depth), but there may be less or more or other image streams. In other words, it is enough if only one weight K is different from 0, in which case K=1. In the event there are several weights, that is to say, several image channels, the more relevant image channel will be assigned a highest weight. For example, a toy manufacturer may consider the RGB channel as the most important one, therefore assigning the corresponding weight a highest value (for example, $K_1 = 0.8$).

In a more general way, the total confidence (%) can be represented as follows:

$$\text{Total confidence (\%)} = 1/(\sum_j Kj * \%\text{image source\_j})$$

wherein %image source_j represents the different image sources that may be used, such as RGB, B&W, NIR, FIR, depth, etc., and Kj represents the weight assigned to each image source.

It is remarked that in embodiments of the invention, for each image source, stream or channel, the lowest confidence index for the whole set of image segments is assigned to be the confidence index for that image source. In other words, %image source_j corresponds to the minConf for image source j.

In the event that the work part has attributes, an additional comparison is performed, in which the at least one attribute of the work part is compared with the corresponding attribute of the part model, in order to compute the percentage of error or the percentage of match. In this case, if the percentage of error -obtained by comparing the at least one attribute of the work part with its counterpart in the part model- is high, the total confidence (%) is penalized accordingly. The attributes may therefore serve at discarding a work part.

When more than one pictures are used for validating a work part, each picture is independently preprocessed and processed (analysis, comparison and calculation), in such a way that each picture provides its own decision. By weighting the partial results (the result for each picture), a final decision is made (acceptance or denial of the work part under analysis).

Finally, a decision (stage 48) as to whether the work part to be loaded corresponds with the work part that must be loaded in the production machine 3 or not, is made based on an adjustable threshold T <100%. As a matter of example, the adjustable threshold T may be selected to be between 75% and 100%, such as between 75% and 95%, or between 80% and 95%, or between 80% and 90%. Thus, if the percentage of total confidence is above the threshold T, it is decided that the current work part 6 corresponds with the work part that must be loaded in the production machine 3. Besides, a tolerance value p with respect to the selected threshold T may also be established. The tolerance value p may be defined as a fraction $p \in R$ [0, 1] of the threshold T. As a matter of example, the tolerance value p may be selected to be between 0.6 and 0.99, such as between 0.7 and 0.99, or between 0.7 and 0.95, or between 0.8 and 0.95, or between 0.8 and 0.9. Thus, if the percentage of total confidence is between $\rho$*T and T ($\rho$*T < %Total confidence < T), the user (for example, a technician or an operator), should make a decision. For example, the user may manually check whether the work part 6 is the correct one or if it is correctly oriented. When the tolerance value p is used, if the percentage of total confidence is below $\rho$*T (%Total confidence < $\rho$*T), the algorithm establishes that the current work part 6 is not the right one or is not correctly oriented.

In sum, the method for aiding in loading work parts in manufacturing operations described in the present disclosure permits, after a very simple and quick configuration stage in which a data model of a new work part is created, to determine whether a work part to be loaded into a machine is the right one or is correctly oriented. Thanks to this method, incorrectly loading a work part in a machine is prevented, thus preventing machine failure or malfunction, loss or severe damage to equipment/property and/or severe productive loss, among others.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. A computer-implemented method for aiding in loading work parts in a machine tool, comprising:

   with at least one image capture device (5), capturing (42) at least one image of a work part (6) to be loaded in a machine tool;
   digitally extracting (43) at least one image feature of said at least one image, wherein the at least one image feature is selected from the following group: RGB, grey scale, black & white, IR and depth;
   digitally preprocessing (44) the at least one extracted image feature;
   from said at least one preprocessed image feature, digitally comparing (46) the work part (6) with a reference model thereof;
   from the result of said comparison, establishing (47, 48) whether the work part is the correct one or not or correctly positioned or oriented or not.

2. The method of claim 1, further comprising, prior to digitally comparing (46) the work part (6) with a reference model thereof, digitally obtaining (45) at least one image attribute from the preprocessed extracted image features.

3. The method of any one of the preceding claims, further comprising, prior to capturing (42) said image for comparison, digitally creating a reference model.

4. The method of claim 3, wherein said reference model is created as follows:

   with the at least one image capture device (5), capturing (32) an image of a first work part of a certain model, digitally extracting (33) at least one image feature of said captured image, wherein the at least one image feature is selected from the following group: RGB, grey scale, black & white, IR and depth.

5. The method of claim 4, wherein the creation of said reference model further comprises segmenting the captured image into a plurality of regions of interest having a configurable number of pixels n x m.

6. The method of either claim 4 or 5, wherein the creation of said reference model further comprises at least one of:

   obtaining (34) the outer surface of the volume defined by the part used for creating the reference model;
   obtaining the color or colors of the part used for creating the reference model;
   obtaining (35) masks or blind points of the part used for creating the reference model;
   obtaining (36) measuring points, such as corners, of the part used for creating the reference model.

7.  The method of any one of the preceding claims when dependent on claim 2, wherein the stage of digitally obtaining (45) at least one image attribute further comprises at least one of:

    obtaining the outer surface of the volume defined by the part;
    obtaining the color or colors of the part;
    obtaining masks or blind points of the part;
    obtaining measuring points, such as corners, of the part.

8.  The method of any one of the preceding claims, wherein the stage of digitally preprocessing (44) the at least one extracted image feature further comprises segmenting the captured image into at least one region of interest having a configurable number of pixels n x m.

9.  The method of claim 8, wherein the stage of digitally comparing the work part (6) with a reference model thereof, further comprises, for each region of interest into which the image has been divided:

    establishing a confidence index representing an estimation of how close to its corresponding region of interest in the piece model the current region of interest is;
    selecting the minimum confidence index of all regions of interest, said minimum confidence index being the confidence index for said image.

10. The method of any preceding claims, wherein image features of a plurality of image features are extracted, the method further comprising:

    at the stage of digitally comparing (46) the work part (6) with a reference model thereof, establishing a confidence index for each image feature, said confidence index representing an estimation of how close to its model the work part (6) is;
    calculating (47) a total confidence by weighting the percentage of certainty of each image feature according to a weight assigned to each image stream.

11. A system for aiding in loading work parts in a machine tool, comprising:

    at least one image capture device (5) for capturing (42) at least one image of a work part (6) to be loaded in a machine tool;
    processing means configured for performing the method of any one of the preceding claims.

12. A computer program product comprising computer program instructions/code for performing the method according to any of claims 1-10.

13. A computer-readable memory/medium that stores program instructions/code for performing the method according to any of claims 1-10.

EP 3 825 913 A1

FIG. 1

FIG. 2

11

```
┌─────────────────────────┐
│          start          │───────── 31
└─────────────────────────┘
              │
              ▼
┌─────────────────────────┐
│      Image capture      │───────── 32
└─────────────────────────┘
              │
              ▼
┌─────────────────────────┐
│    Feature extraction   │───────── 33
└─────────────────────────┘
              │
              ▼
┌─────────────────────────┐
│           end           │───────── 37
└─────────────────────────┘
```

# FIG. 3A

31 — Start

32 — Images capture

33 — Feature extraction

34 — Surface definition

304

35 — Mask definition

36 — Points especification

37 — End

**FIG. 3B**

FIG. 4

npixels$_x$

npixels$_y$

**FIG. 5**

**61** → i=0,minConf=1

**62** → diff=|img(i)-patron(i)|

$$diff= \begin{cases} 0 \text{ if } diff < threshold \\ diff \text{ otherwise} \end{cases}$$

diff=threshold(diff) **63**

conf=1-diff/max **64**

**65** conf<minConf

**66** yes → minConf = conf

**68** i = i + 1

no

**67** i < n

yes

no

end **69**

## FIG. 6

Europäisches
Patentamt

European
Patent Office

Office européen
des brevets

## EUROPEAN SEARCH REPORT

Application Number

EP 19 38 3018

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Y. JIANG ET AL: "Learning to place new objects in a scene", THE INTERNATIONAL JOURNAL OF ROBOTICS RESEARCH, vol. 31, no. 9, 14 May 2012 (2012-05-14), pages 1021-1043, XP055162517, ISSN: 0278-3649, DOI: 10.1177/0278364912438781 * abstract * * page 1 - page 2 * * page 4 - page 11 * * figures 1-3,11 * | 1-13 | INV. G06K9/62 B25J9/16 G06K9/00 |
| A | HARADA KENSUKE ET AL: "Validating an object placement planner for robotic pick-and-place tasks", ROBOTICS AND AUTONOMOUS SYSTEMS, vol. 62, no. 10, 2014, pages 1463-1477, XP029043447, ISSN: 0921-8890, DOI: 10.1016/J.ROBOT.2014.05.014 * abstract * * page 1465 - page 1470 * * page 1474 * * figures 2,3,6,10, 11 * | 1-13 | |
| | | | TECHNICAL FIELDS SEARCHED (IPC) G06K B25J |

The present search report has been drawn up for all claims

| Place of search | Date of completion of the search | Examiner |
|---|---|---|
| The Hague | 23 April 2020 | Karwe, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)